# EUROPEAN PATENT APPLICATION

(11) **EP 3 214 595 A1**
(43) Date of publication of application: **06.09.2017**
(21) Application number: 17158757.9
(22) Date of filing: 01.03.2017
(51) Int. Cl.: G06Q 30/06, G02C 13/00

(54) **PROCEDURE FOR ORDERING GLASSES, AND CORRESPONDING PROCEDURES FOR MANUFACTURING, SUPPLY AND DEVICE**

(30) Priority: 03.03.2016 ES 201630255
(71) Applicant: Indo Optical S.L., 08174 Sant Cugat del Vallès, Barcelona (ES)
(72) Inventor: GIMÉNEZ CAROL, Antonia, 08950 Esplugues de Llobregat (ES); PRIETO PIN, Carmen, 08902 L'Hospitalet de Llobregat (ES); DÜRSTELER LÓPEZ, Juan Carlos, 08860 Castelldefels (ES); EGIO ARTAL, Alfonso, 08174 Sant Cugat del Vallès (ES)
(74) Representative: Curell Suñol S.L.P.

(57) **Abstract**

Procedure for ordering glasses and corresponding procedures for manufacturing and supply and device. Procedure for ordering glasses comprising:
- obtaining morphological data on the user's head,
- determining the optimum position of the lenses,
- determining the feasible frames from among the frames on a frame database, and ruling out the non-feasible frames,
- calculating a feasible pair of lenses for each feasible frame and ruling out the frames without feasible lenses,
- user selecting at least one feasible frame from a database of feasible glasses (made up of a feasible frame and feasible lenses), one feasible pair of lens from among the feasible lenses for said frame, and representing the user's face with the selected frame and lenses assembled in the position of use,
- confirming a selection and placing the order.

## Description

### Field of the invention

The invention relates to a procedure for ordering glasses, where the glasses comprise a frame and a pair of lenses.

The invention also relates to some procedures for manufacturing glasses, frames and lenses, as well as to a procedure for supplying glasses.

The invention also relates to a data processing device, to a computer program product and to a computer readable means

### State of the art

In the state of the art, the process of choosing glasses has not varied substantially in the last 70 years. First of all, the optical-optometrist performs a refraction test on the client to determine the characteristics of the corrective lenses.

Next, the patient has to choose a frame. The characteristics of the corrective lenses that have determined the previous process can limit some frame models (typically when the corrective lenses have a high optical strength, or when dealing with progressive lenses, etc....). This limitation can be a reason for frustration when buying.

On the other hand, although there is a great diversity of different models, all frame models have very similar dimensional characteristics in terms of the width of the front part, the width of the bridge, the length of the arms, the tilt of the lens, etc.... These "standard" dimensions correspond to the average characteristics of the adult population. The same applies to children's frames. This means that the models are offered in one size only or, in some cases, with small variations in the dimensions of the front part or of the arm, and that therefore, there are often people for whom the model dimensions are not suitable. However, really glasses users have a great variety of morphological characteristics such as the width of the front part, the nasal width at the height of the eyes, etc. The optician has different frame models in his shop that the client must try in order to choose the ones he or she likes, that suit his or her measurements and which are comfortable to wear. However, and providing this is possible, the optician often has to adapt the frame to the user's characteristics in order to modify, for example, the width of the nasal support plates, the final curve of the arms or to change the pantoscopic tilt (the angle the lenses form with the vertical plane). This is a complex, inaccurate and limited process. Given the viscoelastic characteristics of some polymeric materials, the material tends to recover, at least partially, its initial shape and so the modification of the shape of the frame performed by the optician ends up disappearing.

The next step consists in taking the measurements for assembling the lenses, in other words, the position where the centre or point of reference for assembling the lenses is placed for each front rim in the chosen frame. These co-ordinates are determined by the relative position of the pupils with respect to the front frame rim that houses each lens. It is worth mentioning that the precision with which these co-ordinates are determined, is going to determine the success or failure of the visual adjustment or comfort (depending on the strength of the lenses and the patient's degree of tolerance). Typically, an error less than +/- 0.5 mm is tolerated. For more than 20 years there have been instruments for automatically or semi-automatically determining the pupillary reflexes, based on taking pictures of the user's face and profile with the glasses on and determining the pupillary co-ordinates with respect to the rims.

Finally, the optician must advise on the most suitable type of corrective lenses based on the data from the refraction test, the frame data and the frame assembly co-ordinates. There are a multitude of lens alternatives and prices in catalogues provided by lens manufacturers. The type of lens is chosen on the basis of the type of activity envisaged, user characteristics, the features of the lens and the frame in which they are going to be housed, and also the price. Choosing the lens treatments and colouring is also part of this process.

As can be seen, selecting the frame and the lenses is a complex process, and in some cases, inaccurate and costly in terms of time. Also, some people see their choice of frames limited because they require lenses that do not adjust to the geometry of certain frames.

EP 1.063.600 describes a virtual frame testing system.

EP 1.892.660, EP 2.076.814 and WO 2014/060120 describe methods and systems for ordering glasses.

WO 2015/101737 and EP 2.746.838 describe some ways of setting the default values of frames in order to adapt them to a user's head.

### Summary of the invention

The aim of the invention is to overcome these drawbacks. This purpose is achieved by means of a process for ordering glasses of the type indicated at the beginning, characterised in that it comprises the following stages:
- obtaining the user's data, which includes obtaining morphological data on the user's head,
- determining the optimum position of the lenses with respect to the user's face,
- determining the feasible frames from among the frames in a frame data base (preferably by arranging the frame virtually so that it respects the optimum position of the lens), and ruling out non-feasible frames,
- calculating at least a feasible pair of lenses for each feasible frame (preferably based on the lens positioning data in each feasible frame, the prescription, the geometry of the rims and the catalogue of available lenses) and, in the event it is not possible to obtain any feasible lenses for a certain frame, ruling out the frame from among the feasible frames,
- positioning a feasible pair of lenses in each feasible frame,
- presenting to the user, a database of feasible glasses, each made up of a feasible frame with a feasible pair of lenses,
- user selecting a feasible frame based on the database of feasible glasses, and representing a 3D image of the user's face with the selected frame arranged in its position of use,
- selecting at least one pair of lenses from among the feasible lenses for the selected frame (material, colour, etc.) and representing a 3D image of the user's face with the frame and the selected lenses assembled,
- confirming a user selection and placing the corresponding order.

Effectively, one of the problems that arises when a user wants to buy some new glasses is that, when selecting the frames, the client chooses a frame which later is not satisfactory for him or her. This is a drawback even if it is detected in time that the result will not be satisfactory (i.e., before manufacturing the lenses), since the user has already made his or her selection and is then obliged to rule out the chosen frame, with the consequent frustration this involves, and start the selection process again with the frames that he or she had previously ruled out. With the procedure according to the invention, a prior selection is made and the frames that will not produce a satisfactory result are ruled out automatically, and only those frames with a certain degree of feasibility are shown. This way, the user can choose freely from among the frames that are shown to him or to her, and there is no risk that, after choosing one, they will be told that the chosen frame is not feasible.

Below is a detailed account of each of the stages of the procedure according to the invention:
When obtaining the user data, the main objective is to obtain morphological data on the user's head. Effectively, the frames are usually designed on the basis of average data that allow defining "standardised heads". However, these average data may not adjust to the head of a specific user. In fact, due to definition per se of average values, they will never coincide with the real values of the specific user and, in some cases, they will be so different that the frame will not be suitable for the real specific user. Preferably, obtaining morphological data on the user's head includes obtaining data on the width of the face, the nasal surface, the position of the ears and the position of the pupils in a three-dimensional space, which is done preferably by obtaining stereoscopic images of the user's head. On the one hand, the indicated data are the most important for determining the optimum position of the frame on the user's head and, on the other hand, working in 3D allows working with much more precision and realism. Advantageously obtaining morphological data on the user's head comprises taking simultaneous images (generally, it must be understood in this specification that "simultaneous" means images taken in an interval smaller than 1 second, preferably less than 500 milliseconds and very preferably less than 300 milliseconds) in the visible spectrum and in the infra-red spectrum, where the images in the infra-red spectrum are used to determine the position of the pupils. Effectively, taking the images in the visible and infra-red spectrum simultaneously, guarantees that the points determined on the basis of the image in the visible spectrum and the points determined on the basis of the infra-red image (the pupils) correspond exactly to the same position of the head. Preferably morphological data on the user's head is obtained without the user wearing any glasses or frames, since, in fact, they would make it difficult to take the morphological data. Also, the images of the head will be used to generate a 3D image of the user's head on which the 3D image of the frames (in fact, the glasses, i.e., the frames and the corresponding lenses) selected by the user will be mounted. If the morphological data were taken with the frames on, these should be "eliminated" during the subsequent processing of the images with the complexity that this involves. However, an improvement in the procedure of the invention consists in including the positioning of a reference device on the user's ears while obtaining the morphological data on the user's head. Effectively, the top end of the ears is a particularly important dimension that is difficult to obtain from images, among other things because the hair usually covers it, at least partially. Including a reference device improves the accuracy in determining this point.

Generally, the lenses are designed to be in a certain position with respect to the user's eyes. This position is the optimum position and it is usually predefined. If the lens is not in the optimum position, the quality of the user's vision can be jeopardised, particularly in the case of prescription lenses. In some cases, the design of the lens is optimised taking into account its real position with respect to the eye for a certain frame. However, in this invention, the strategy used is different: it is ensured that the lenses are in their optimum position and the frames allowing the lenses to be in their optimum position are selected. Logically, it must be understood that when, in this description and claims, reference is made to "the optimum position", really it refers to a range of position values close enough to the theoretical optimum position whereby the user does not perceive a loss of vision quality. Therefore, the "optimum position" will really be a range of positions that can vary depending on the frame, the prescription, or other parameters, but which, at any event, will be predefined so that, in the stage of determining the feasible frames, the system knows how to distinguish between the frames that fall within the admissible range and those that fall outside it.

Preferably in the stage of determining the optimum position of the lenses with respect to the user's face, the lenses are positioned at a preset distance from the eye, the eye's vision axis is made to coincide with the axis of the corresponding lens or the point of reference for the corresponding assembly (i.e., the point of the lens which, by design, must be on the pupil so that the axis that joints the pupil and the assembly point of reference coincides with the vision axis) and/or the lenses are positioned at a preset pantoscopic angle.

The system includes a frame database. The database includes data in 3 dimensions on the frames. In some cases, the frame manufacturers already provide this information. Otherwise, the physical frames are digitalised by any suitable means available. The procedure analyses whether the frames included in the database are suitable for the user, in other words, if once mounted on the user's head the lenses are in their optimum position (i.e., within the permitted ranges). The frames are classified into two groups: feasible frames (those which, when mounted on the user's head, position the lenses in the optimum position) and non-feasible frames. I.e., preferably, in the stage of determining the feasible frames, it is considered that feasible frames are those that allow the positioning of the lenses within pre-established ranges of the optimal position.

The system also contemplates the possibility of choosing between a plurality of lenses. The selection criteria can be diverse, such as for example the colour of the lens, the lens material, etc. It is possible that a certain frame positions the lenses appropriately with respect to the user's head but, nevertheless, it is not possible to manufacture the lenses, for example, because their diameter is not big enough or because they have a minimum thickness at some point on the lens that is smaller than a minimum preset value or because their curve difference is too big with respect to the curve of the front part of the frame, which can cause problems with supporting the lens in the front part of the frame. Also, the fact that a lens is not possible, may not only depend on the frame and the user data (the morphological data of their head and/or those derived from the necessary prescription), but also on the type of lens chosen (particularly the material, which has a significant influence on the refraction index and, therefore, on the thickness (and weight) of the lens). It is interesting to rule out those frames for which there is no feasible lens, and consider the feasible frames to be those for which there is at least one feasible lens (although perhaps there is some other lens that is not feasible). In other words, a frame will be considered feasible if there is at least one feasible pair of lenses out of the set of existing lenses. Therefore, the procedure includes the stage of calculating at least some feasible lenses for each feasible frame and, if no feasible lenses can be obtained for a certain frame, the frame is ruled out from the feasible frames. The feasible lenses are not calculated for the frames that are ruled out in the previous stage, and this reduces the system processing time. This way, after the two previous stages the group of feasible frames includes those frames for which there is at least one optimum solution (because of the positioning of the lenses and their dimensions). Preferably it is considered that a lens is a feasible lens if [a] the diameter of the lens is not more than a preset maximum value, [b] the thickness of the lens is not less than a preset value at some point thereon (usually in the centre of the lens, in the case of negative monofocal lenses) and/or [c] if the thickness of the lens is not higher than a preset value at some point thereon (usually in the centre of the lens in positive lenses and in the perimeter of the lens in negative lenses, caused either by the user's prescription, by the excessive curve difference between the front part of the frame and the lens or both cases simultaneously). In particular, given that in order to calculate the lens, the frame geometry, the lens assembly centres and the patient's prescription are known, in many cases the thickness of the lens can be minimised to offer a much finer lens (operation known commercially as pre-calibrated). An example is that described in patent ES 2.323.935 B1, also published as EP 2.236.244 A1.

In the case of lens thicknesses greater than a preset value, the high thickness may imply a technical feasibility problem in manufacturing the lens (for example, due to the lack of material), but it can also simply imply an aesthetic problem (a lens perimeter with a high, non-aesthetic thickness). In this invention both cases can be taken into consideration. What is important is that there are some preset limit values (defined with whatever criteria) so that the system can decide whether or not the lenses comply with the preset limit. The same occurs with the thicknesses below the preset limit value: it is possible that a lens may be manufactured with a very low thickness, but the result will be a very fragile lens that will break too easily. Therefore, the preset minimum thicknesses can be due to technical causes (material availability) and also to other causes "of a practical nature" such as preventing the resulting lenses from being too fragile.

Now the system can generate a database on feasible glasses, made up of those feasible frames for which there is at least a feasible pair of lenses. This database is the one that is shown to the user, so that it is sure that the user can choose any frame freely with the assurance that it will not be necessary to change the frame for reasons "against their will". The specific selection method can be any of those already in existence in the state of the art. Preferably the user can select one or several frames that are shown to him or her, and the system generates a virtual 3D image of his or her head with the frames in their position of use. As mentioned above, this position of use is such that the lenses are in the optimum position, which has been defined above. Preferably the frames already include some of the feasible lenses, whereby the user can already have a first impression of how the glasses look. Advantageously, the user can select some elements, from among several alternatives, which modify the chosen frame, particularly the colour of the front part, the colour of the arms, the shape of the arms, the inclusion of ornamental elements on the arms, etc. Preferably, the user cannot modify the framework of the frame, in other words, he or she cannot modify the perimeter of the lenses, since this has a negative effect on the style of the lens. Preferably the user can choose between various lens colours and/or materials. In each case, the system shows the glasses with the selections added. Finally, the user confirms a selection made and, with the corresponding data, an order is placed.

Generally, the procedure according to the invention is suitable for all kinds of glasses, both for non-prescription glasses, for example conventional sunglasses, and for prescription glasses. However, it is particularly advantageous in the case of prescription glasses since, in this case, the correct positioning of the frame is more important, and the effect of the prescription on the lenses can be very important, so that perhaps it is necessary to rule out a frame due to the prescription required by the user. In this respect, it is advantageous that in the stage of obtaining user data, the user's prescription data are also obtained and that the stage of calculating at least a feasible pair of lenses is done taking into account the user's prescription data.

On the other hand, all or some of the user data can be stored in the system's memory, as they may have been acquired beforehand (for example, for a previous purchase), in which case this first stage will be limited to accessing the stored data and, if applicable, completing or partially replacing this data with new data.

Logically, also other usual user identification data can be collected.

Preferably the stage of determining the feasible frames includes personalising parameterised frames included in said frames database, where the personalisation includes assigning specific values to some parameters in the parameterised frames, where the shape and/or dimension of the parameterised frames depends on the values that are assigned to the parameters, and where the specific assigned values are such that they generate a shape of the parameterised frame that positions the lenses in some preset ranges of its optimum position.

Effectively, the procedure according to the invention is particularly interesting when the frames in the frames database are not "conventional" frames (i.e., with a fixed geometry), but parameterised frames, in other words, they are frames whose final geometry depends on the specific values that are assigned to some parameters included in the definition of the frame. This way, when the system analyses which of the frames included in the database are feasible frames, in the case of parameterised frames the system can modify the parameter values. According to the parameter values, it is possible that a frame is feasible or not. If there is a combination of specific parameter values that make the frame feasible, the system will include this frame, with these specific parameter values, in the group of feasible frames. Also, a precise calculation of the parameter values allows positioning the lenses as close as possible to the theoretical optimum position. The frames database can include both "conventional" frames and parameterised frames. In the first case, the system will be limited to determine whether they are feasible while in the second case it will calculate different combinations of parameter values to determine whether there is a combination that makes the frame feasible and, if so, what combination takes the lens position to the theoretical optimum position.

The parameterised frames thereby allow a greater freedom of choice, as it reduces the amount of non-feasible frames, and the quality of the end result is improved, since the feasible frames are optimised so that [a] the position of the lenses is as close as possible to the theoretical optimum position and [b] the personalised frame (i.e., the frame with the parameter values adjusted to the specific user) lies correctly adjusted to the specific user.

Preferably in the personalisation stage essential design characteristics are preserved, in other words, the parameters (and the ranges of values that they can take) are defined so that the frame does not lose its original aesthetics. Therefore, the parameters (and the range of values that they can take) must be defined for each design, since in each case they may be different parameters. For example, in the case of circular frames one parameter may be the diameter of the rim. Effectively, modifying the value of the diameter (within some reasonable ranges) does not modify the aesthetics of the lens. In the case of rectangular frames, the angles of the vertexes must be maintained but it is possible to modify the lengths of the sides (proportionally the greater sides of the smaller sides or even a non-proportional shape, providing the aesthetic appreciation is not substantially modified). In more complex frame geometries, it may be necessary to consider more complex parameterising strategies, that can be defined for each new frame design. Other parameterising techniques (that can be combined with the previous ones) can make variable the length of the arms, the width of the bridge, etc. For their part, the specific values are perfectly related to the user's facial dimensions, such as for example the width of the nasal bridge, the frontal width of the user's face, the length of the arms, etc. These details are discussed in greater detail in the examples. Advantageously the specific values imply that the frame dimensions affected by the specific values in question coincide with the corresponding dimensions of the user's head. In other words, the specific values make the frame dimension adjust exactly to the corresponding dimension of the user's head. Although this solution is particularly interesting in most cases, the opposite alternative must not be ruled out (that the specific values do not make the frame have the exact dimensions for optimum adjustment on the user's head. Effectively, in some cases, such as for example in the case of very asymmetrically positioned user ears, it may be interesting that the corresponding parameters end up adopting some commitment values, which still allow a good adjustment on the user's head but without excessively penalising the aesthetics of the frame (some highly asymmetrical frames are usually rejected for aesthetic reasons).

Preferably the stage of personalising parameterised frames is carried out using grid deforming methods. Effectively, a 3D object can be represented based on styling surfaces that include a certain volume or also by a cloud of dots that are contained in the volume that delimits the 3D object. Therefore, the set parameters of a 3D model can be modified on the styling surfaces or on the cloud of dots. In the first case, the surfaces must comply with certain conditions of continuity and derivability. This complicates the parameterisation and, in some cases, in points where many restrictions converge, the transformations cannot always be fulfilled. However, the grid deforming technique works directly on the cloud of dots so as to avoid the problem situation mentioned above. This is because techniques have been developed for avoiding overlaps which make it more robust and make it particularly suitable for parametric deformation using multiple degrees of freedom. There are two types of deformation strategy, interpolation or physical analogy. In the first case, an interpolation function is used to transfer movements, while in the case of physical analogy, the grid deformation is described according to a physical process that can be modelled using numerical methods.

Advantageously the stage of personalisation includes a stage of incorporating at least one identifying mark on the parameterised frames. Effectively, the procedure allows generating personalised frames, whereby these frames can be personalised not only from a point of view of "optical suitability", but also other personalised elements can be included. So, preferably, these identifying marks can identify the user (for example, including their name, their initials or any other sign that the user wants), the order or the manufacturing reference (for example, by means of some reference number arranged in a non-visible place when the glasses are used normally), the frame model, the frame brand, some identifying element of the distributor (for example, the brand of the optician who sells the glasses), etc. This identifying mark can comprise any element that can be reproduced subsequently during the manufacturing process (high reliefs, low reliefs or simply with different colours without affecting the geometry of the frame, and preferably it comprises alphanumeric characters, drawings, patterns or logos.

Advantageously, the procedure according to the invention is implemented in a computer, and preferably in a distributed computer system.

Generally, in the procedures for manufacturing and distributing glasses a plurality of "work centres" are involved which frequently do not belong to one and the same company. So, for example, the user may go to an optician, where the user data collection process will take place. All the computer processing can take place in a computer belonging to the optician or it can take place in a distributed way where several computers, interconnected to each other but perhaps with different owners, make the calculation together. Once the purchase order has been generated, the frame and the lenses may be manufactured by different companies. Finally, the bevelling of the lenses and the assembly of the lenses in the frame can be done by the optician or by a third party. Nevertheless, in all the possible combinations above, the procedure according to the invention takes place. Also, the basic concept of the invention is a procedure which preferably is implemented in a computer, whereby there also appears the figure of the computer program developer as, once developed, it can be sold to any third party who will enable it to carry out the procedure according to the invention, or even the computer program developer (or a third party who has bought it) can make it available for use (for example over the Internet), for example, by paying a connection quota. On the other hand, a preferred embodiment of the invention implies using parameterised frames, which involves the work of frame designers, who also can be independent of the other "agents". Therefore, this invention also refers to:
A - a procedure for manufacturing glasses, characterised in that it comprises a procedure for ordering glasses according to the invention, and a stage of manufacturing and assembling the frame and the lenses selected by the user.
B - a procedure for manufacturing frames, characterised in that it comprises a procedure for ordering glasses according to the invention, and a stage of manufacturing the frame selected by the user.
C - a procedure for manufacturing lenses, characterised in that it comprises a procedure for ordering glasses according to the invention, and a stage of manufacturing the lenses selected by the user.
D - a procedure for suppling glasses, characterised in that it comprises a procedure for manufacturing glasses according to the invention, and a stage of supplying the frame and the lenses manufactured and assembled.
E - a procedure for generating data of a parameterised frame, characterised in that it comprises the following stages:
   a - creating a new design of a frame, or importing the 3D data of a pre-existing frame (for example, based on a physical frame [by scanning or digitalising said frame] or based on the drawings of said frame), with a design that characterises it,
   b - determining the characteristics that identify the design of the frame, including:
      - Identifying and separating the parts of the frame that are independent from the rest and which, therefore, are suitable for being modified without altering the dimensions or appearance of the rest,
      - Determining the parts of the frame that are going to be modified by preserving an aspect ratio,
      - Determining the parts of the frame that have to remain unvaried,
   c - determining the way in which the non-variable parts of the modifiable parts connect together and assigning parameters that determine the modification of the modifiable parts,
   d - determining the restrictions to apply to the design,
   e - constructing a parametric 3D model of the frame (i.e. which is parametrically deformable), which preserves the original characteristics of the design and which is suitable for being modified according to a set of degrees of freedom defined by the parameters,
   f - determining the ranges and the type of variation possible for each personalisation parameter for each frame model based on the established restrictions, and
   g - determining the parameters of the frame that must coincide with certain points, distances and/or sections of the user's head.
F - a data processing device characterised in that it comprises means for implementing the procedure according to the invention. Preferably the data processing device comprises a plurality of image taking means in the visible spectrum and in the infra-red spectrum, suitable for taking images of the user's head and the user's pupils, respectively, and it also comprises means for synchronising the image taking means, suitable for synchronising the capturing of images by the image taking means. Advantageously, the data processing device also comprises some reference devices suitable for being positioned on the user's ears and suitable for referencing the point of contact between the frame and the user's ears.
G - a computer program product comprising sequences of instructions accessible to a processor which, when they are executed by the processor, cause the processor to execute the procedure according to the invention.
H - a computer readable means with a sequence of instructions for the computer program product according to the invention.

### Brief description of the drawings

Other advantages and characteristics of the invention are appreciated from the following description, wherein, in a non-limiting way, some preferred embodiments of the invention are explained, mentioning the accompanying drawings. The figures show:
Fig. 1, relation between the nasal width measurements and interparietal distance for a set of 459 adult users.

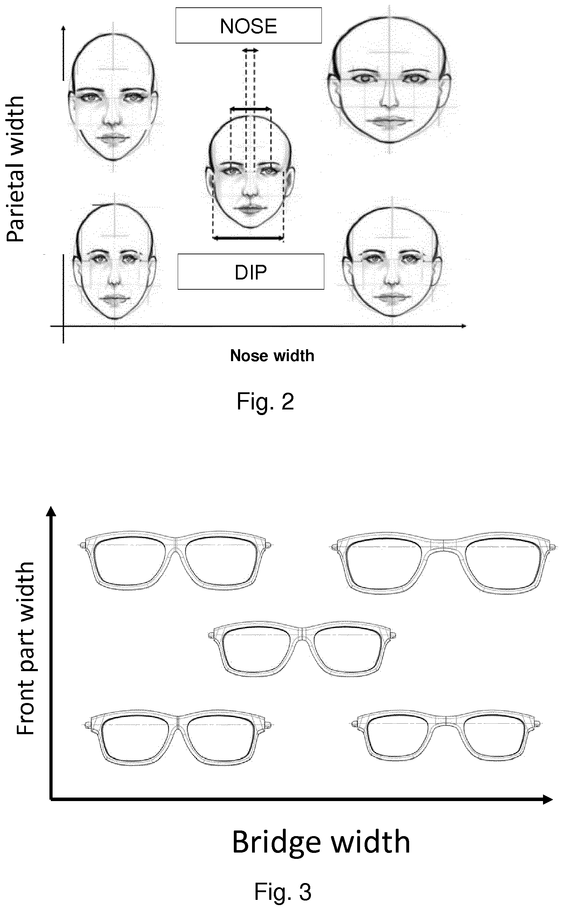

Fig. 2, graphic example of dimensional variability in nasal width in relation to the parietal width.
Fig. 3, example of the modification of one and the same frame - central model - in bridge width and front part width according to parameters of nasal width and parietal width in the example shown in Fig. 2.
Figs. 4, 5 and 6, orientation of the 3D file of the head in the natural position with the cut according to the horizontal plane at the height of the pupils (Fig. 4), identification of the user's points of reference (Fig. 5) and view of the pupillary-parietal point cut (Fig. 6).

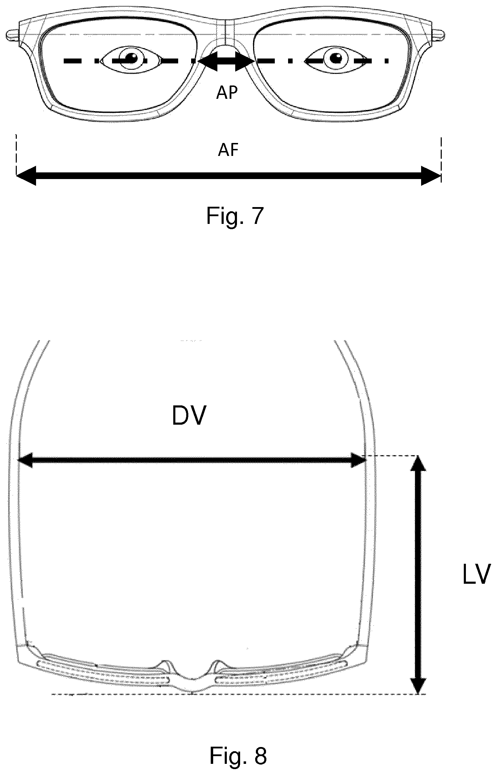

Fig. 7: distance of the front part of the frame (AF), taken between the rotation axes of the hinges or join with the arms, and bridge width (AP) taken from the nasal support plates at the height of the pupils.
Fig. 8: distance between arms (DV) at the height of the contact with arm support on the ear, and arm length (LV) taken as the distance between the point of contact with the arm support on the ear and the point before the bridge.

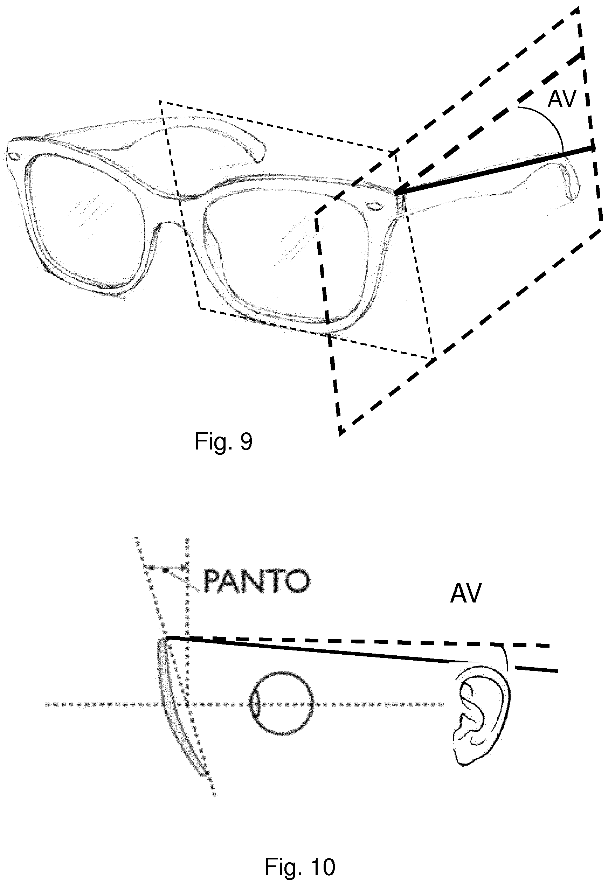

Fig. 9, determining the AV parameter, that is, the tilting angle of the arm with respect to the horizontal plane.
Fig. 10, Distinction between the pantoscopic angle (PANTO) and arm angle (AV)
Figs. 11 and 12, frame parameters equivalent to the facial dimensions.
Fig. 13, example of the position of use of a lens.
Fig. 14, example of the positioning of a parametrically personalisable frame model for which it is considered that the position of the pupil must be at 66% of the Boxing height HBOX, and lens assembly height with respect to the rim base SEGHT, in this example SEGHT=0.66*HBOX.
Figs. 15 and 16, differences between pantoscopic angles for different users.
Fig. 17, image taking means according to the invention.
Fig. 18, reference devices according to the invention.

### Detailed description of some embodiments of the invention

### Personalising frames:

Dimensional or parametric personalisation allows adapting the dimensions of the frame to the user's morphological characteristics based on parameters related to certain facial dimensions. Therefore, first a 3D model is built of each frame and the contour of the rims determining the shape and dimensions of the lenses is obtained.

Frames can be personalised dimensionally in various ways, for example:
a) By isometrically modifying or changing the scale of the whole frame. This is the same concept of "sizes" in clothing applied to frames (for example, a family of frames can be designed with three lens measurements but the arm and the bridge are fixed). This option provides a first level of simple personalisation, but the scale change does not allow, for example, creating a large front part with a narrow bridge for someone who has a wide head and narrow nose.
b) By freely changing the dimensions of all the frame parts, where they are modified independently according to the dimensional needs of the user. This option offers a perfect adjustment but it has a significant drawback: the design characteristics can be disfigured and in this case the original model is no longer recognisable.
c) By parametrically changing the dimensions with restrictions in order to preserve the identification of the design. This alternative allows re-dimensioning that suits the user's characteristics, without thereby rejecting the actual characteristics of the model, which makes it particularly interesting.

A preferred embodiment of the invention uses a frame personalisation algorithm that relates the frame dimensions with the user's morphological characteristics according to the method of parametrically changing the dimensions with restrictions, but which also takes into consideration optometric criteria, such as for example, the nasal-pupillary distances and the lens assembly heights in the frame for calculating the parametric modification, as well as the frame's envisaged position of use.

The invention is also applicable to partially personalised or semi-personalised systems, such as for example, adapting and manufacturing arms with a conventional front part or vice versa.

### Procedure for generating a personalised frame:

First of all, a parametric 3D model is built of the frame, for each frame in the personalisable frames catalogue. For that, it is advantageous to follow the following sequence:
I. Creating a new frame design for glasses, or importing 3D data of a pre-existing model (for example, based on the digitalisation of a frame with a scanner or any digitalisation method). The construction of the 3D model with a cloud of points joined by grids, is a particularly suitable technique (although not the only one) for making the deformations and parametric changes that the procedure applies.
II. Determining the characteristics that identify the frame design:
   - Identifying and separating the parts of the frame that are independent from the rest and which therefore it will be possible to modify without altering the dimensions or appearance of the rest. (For example, the length of the arm can be increased without thereby altering the dimensions of the front part, or the dimensions of the boxing can be increased without altering those of the bridge)
   - Determining the parts of the frame that are going to be modified by preserving the aspect ratio (for example, in this case an oval rim will be modified by preserving the ratio between the greater axis and the smaller axis)
   - Determining the parts of the frame that have to remain invariable (for example, the hinge).
III. Determining the way in which the invariable parts of the modifiable parts connect together and assigning parameters that determine the modification of the modifiable parts; this characteristic is also particular to each frame model and is related to the characteristics identifying the design.
IV. Determining the restrictions to apply to the design. For example, minimum thicknesses that must be respected, identifying the sections that can be modified homothetically, defining the criteria of continuity of the surfaces enclosing the volume of the model.
V. Constructing a parametric 3D model of the frame that preserves these original design characteristics and which can be modified according to a set of degrees of freedom defined by some parameters, which can have a continuous or discrete variation, between a range defined by a bottom limit and/or a top limit.
VI. Determining the ranges and types of variation possible for each personalisation parameter for each frame model based on the established restrictions. Some of these parameters may not be independent of others (it will depend on the restrictions applied).

### Catalogue (database) of personalisable frames (and glasses) and their components:

Frames: The previous operations can be applied to a set of different frame models making up the catalogue (for example masculine/feminine/unisex models, sport models, etc...) and which constitutes the database of personalisable frames. Each model will have its particular limits in the personalisation parameters variation range and therefore, there can be models that have a greater "adaptability" than others. The criteria defining the parameter variation ranges are basically aesthetic, geometric, or due to manufacturing limitations.

Lenses: In relation to the lenses, there is also a catalogue (or database) of available lenses. Preferably which materials (refraction indices) the catalogue contains is determined, which geometric designs are offered (monofocal, multifocal or progressive lenses, etc.), which treatments (anti-reflective, mirrors, etc.) and/or whether or not colouring can be offered. For each of these combinations, an offered range of strength (typically in intervals of 0.25 dioptres), diameter, etc. will be available.

### Process to follow to make a pair of personalised glasses according to the dimensional needs of a user:

1. Obtaining the data on the user's corrective need or optical refraction (sphere, cylinder, addition, prism, etc...)
2. Digitalising the face and the temporal areas of the user's head for whom the pair of glasses is going to be personalised. This process provides a grid of points that includes the topology of the face, the topology of the nasal area, including the co-ordinates of the pupillary reflexes, and the frame attachment points on the ears.
3. Determining the optimum position of the lenses with respect to the user's face.
4. For each frame in the catalogue a series of operations is carried out to guarantee that those models that cannot be personalised are ruled out (because they are outside the range of the frame parameters) or that a corrective lens according to a necessary prescription and position of the envisaged assembly cannot be offered. These operations consist in:
   - Applying an algorithm that determines the specific value of the frame dimensioning parameters based on the user's file of digitalisation co-ordinates, the prescription data, the ideal positioning of the lenses and the frame fitting.
   - Using the envisaged positioning of the lenses (and consequently the frame) and the characteristics of the type of lens (frame height criterion, etc.), to automatically determine the parameters of the position of use of the lenses (nasal-pupillary distances, frame height, pantoscopic angle, vertex distance, etc.).
   - Ruling out the models that require at least one frame parameter lying outside the range (it must be remembered that the parameter personalisation that is applied has restrictions, therefore it can only be done within limits known previously for each model of glasses).
   - Using the data on the envisaged position of the lenses and the specific geometry of the re-dimensioned front part of the frame, to check that at least one lens out of those making up the catalogue of feasible lenses can be assembled.
   - For those models that are personalisable according to the user's needs, selecting and calculating those lenses from the lens catalogue that are compatible with the user's optical requirements and the frame's dimension requirements (contour of the shape of the rims determined by the dimensions of the personalised frame, as well as its envisaged position of use).
5. User selecting the model (or models) of personalised glasses resulting from the personalisation that is (are) of his/her preference. This operation includes selecting the model, the decoration and finishes on the frame, as well as selecting the corrective lenses (materials, geometries, colour, treatment) which he/she prefers, which have already been checked in point 4 as manufacturable and which can be assembled in the chosen frames.
6. Generating the necessary information for manufacturing the personalised frame that the user has chosen. This information contains in particular a file of the frame in 3D format, as well as the information on the model decorations, materials, finishes, colours, etc. It can also contain information regarding user or order identification codes.
7. Generating a file with the necessary information for manufacturing the personalised lenses chosen by the user. This information contains the prescription data, material and refraction index, as well as the information on the filters, treatments, colours, etc. that the lenses will have. It can also contain information regarding codes, brands (lens types, size and orientation), identifying elements, logos, etc.
8. Manufacturing the personalised frame based on the information in point 6, particularly the previously designed 3D parameter file. Although it is not essential, the technique of additive manufacturing is particularly suitable for making parts of personalised frames since it has the particular feature that each part can be different.
9. Manufacturing personalised lenses based on the calculation file of previously design lenses. According to the technique chosen to manufacture the lenses, these will already have the necessary shape or it will be necessary to cut or bevel the lenses according to the contour of the internal rim of the frame and the envisaged position of use.
10. Assembling the personalised glasses based on the lenses and the frame made according to procedures 8 and 9.

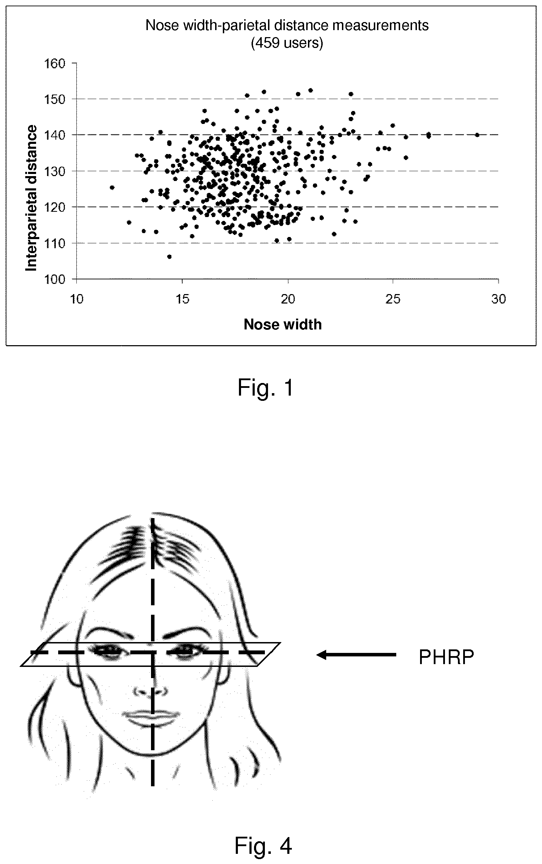

Figure 1 shows the distribution of nose width measurements, the distribution of head width measurements (interparietal distance), and the ratio between both for a set of 459 adult users. It can be noted that there is no clear correlation, as there are cases of nose width with a small parietal distance and also the opposite.

### Example 1: Personalising glasses according to the envisaged position of use and adjustment algorithm based on points on the pupil-ear cutting plane

### a) Starting data.

Based on a digitalisation of the user's head taken in the natural position (i.e., according to the head position that each person adopts in the vertical direction when observing a far-off image at the height of the eyes), a 3D grid of points is obtained, wherein some points of reference are identified which subsequently are related to the frame parameters whereby the personalisation algorithm is designated.

Convention: The 3D file of the digitalisation of the user's head has been orientated as follows to obtain the sections:
- Axis x: Axis that passes through the pupils
- Axis z: Vertical axis perpendicular to axis x
- Axis y: Axis perpendicular to x and y.
- Origin in the pupillary centre

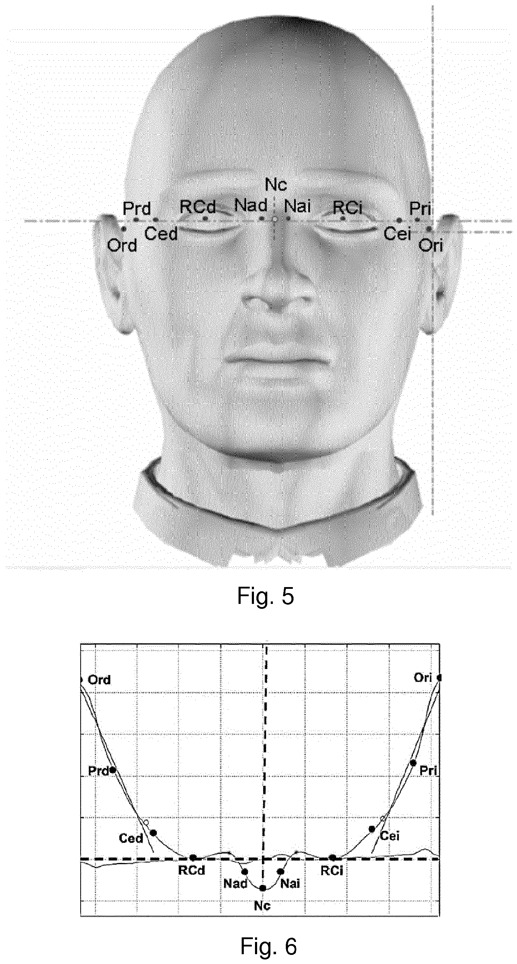

Figures 4, 5, and 6 show the points of the head that have been identified in order to be able to personalise the glasses according to the model presented in this case. As can be seen in Figure 4, the points are chosen so that they coincide with the localisation of the ends of a head section. Thanks to this, they can be determined mathematically since they are maximums, minimums and/or inflection points, based on the intersection curve between the pupillary reflex-ear and the external surface of the head (see Fig. 6)
Nc point: central point of the nose at the height of the interpupillary axis.
RCd point: right corneal reflex point (according to the detection method it coincides with the apex of the corneal radius, or with the image that the light forms inside the eye at 1/3 the ocular radius).
RCi point: left corneal reflex point.
Nad and Nai points: support points for the bridge (nasal maxillary suture) of the glasses. The Nad and Nai points are calculated as the inflection point of the curvature of the nose on both sides of Nc. In order to calculate it in each section, a part of the section between +/- 20 mm (on the axis x) of Nc is used. In each part the maximum and minimum of the first derivation is detected (mathematical definition of the inflection point).
Ced and Cei points: most external point of the face at the height of the line of the eyes (zygomaticofrontal suture).
Prd and Pri points: external right and left parietals.
Ord and Ori points: point of top union of the right and left ears with the head.

The following Table 1 shows an example of these obtained data.

**Table 1: List of cutting points on the pupillary-parietal plane, nomenclature and example of values taken from the 3D of the digitalisation of a person's head.**

| **Point** | **Description** | **X (mm)** | **Y(mm)** | **Z (mm)** |
|---|---|---|---|---|
| RCd | right corneal reflex | -29.81 | 0.00 | 0.00 |
| RCi | left corneal reflex | 29.81 | 0.00 | 0.00 |
| Nc | central nose | -0.91 | -17.47 | 0.00 |
| Nad | right nose width | -6.77 | -10.77 | 0.00 |
| Nai | left nose width | 6.12 | -8.97 | 0.00 |
| Ced | right external socket | -45.77 | 6.14 | 0.00 |
| Cei | left external socket | 43.58 | 6.29 | 0.00 |
| Prd | right parietal | -64.70 | 37.06 | 0.00 |
| Pri | left parietal | 58.21 | 26.27 | 0.00 |
| Ord | right ear | -74.70 | 79.03 | -18.56 |
| Ori | left ear | 69.00 | 76.82 | -16.95 |

### b) Parameterising the frame

Below is a description of an example of a parameterisation of frames with restrictions made on a model on which we allow, on the one hand, certain independent modifications and, on the other hand, modifications associated with each other. Then the dimensions of this parametric frame are adapted to the facial dimensions obtained in the point above.

An important datum for any frame is the boxing dimension, which determines the calibre of the lens. The boxing concept refers to the rectangle that delimits the lens as it is housed in the front part of the frame. This way there are two dimensions, the horizontal and the vertical boxing. The aspect ratio of the frame rims determines the relationship between these two dimensions.

Another important frame parameter is the dimension of the bridge or nasal support opening. In the case of parametric frames, there is the AP parameter defined as the distance between the frame support points on the nose and which is equivalent to the distance between Nad and Nai.

The dimension of the bridge and the horizontal boxing determine the total length of the front part of the frame (parameter called AF and which is defined as the distance between the axes of the hinge).

Other important parameters are those related to the arms of the frame: the distance between arms (DV parameter, defined as distance between ear support points) and the arm length (LV parameter defined as the distance between the middle point of AF and the middle point of DV). Finally, there is the angle formed by the lenses with respect to the vertical plane or pantoscopic angle (PANTO parameter).

In particular, for this frame model it has been chosen to allow five degrees of freedom in frame modifications (independently modifiable frame parameters):
1. Width of the front part (AF) and Width of the bridge (AP) independently modifiable. Consequently, the boxing dimension is determined by the above values since the total width of the front part is the sum of the width of the bridge plus two times the horizontal boxing dimension (or calibre)
2. Distance between arms (DV) and Arm length (LV) independently modifiable.
3. Angle of the frame (AM). Since the design of a frame conditions the angle that the lenses form with the vertical and since this angle is an important parameter that conditions the correct vision in progressive lenses, it has been chosen to allow the modification of the insertion angle of the arms in the front part so that the pantoscopic angle of the lenses is appropriate.

For this model that is shown as an example, the rest of the parameters cannot be varied independently as they are affected by the restrictions included. So:
- there are some parameters that can be modified homothetically such as the boxing dimensions (HBOX and VBOX) and the width of the heel that must maintain the aspect ratio in any transformation.
- the length of the end point of the arm, the wrapping, or curvature of the front part, are preset.

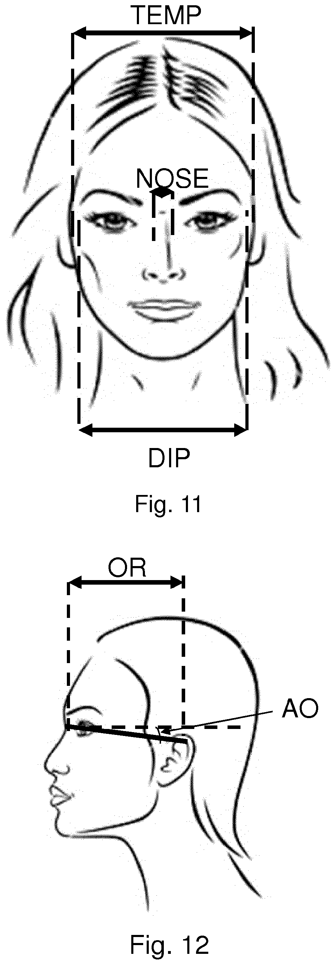

Next, the user dimensions that have been obtained from the digitalisation (and which therefore will vary from one person to another) must be related to the corresponding five frame variables, which are the ones that must be personalised in each case. Based on the digitalisation co-ordinates of the user's head in table 1, some distances are defined that are used to relate them with some equivalent distances of the frames using the personalisation algorithm (see Figures 11 and 12).

They are defined as user parameters at the following values:
- Interparietal Distance DIP= Prd(x) - Pri(x), user parameter that is related to the frame parameter AF (front part width)
- Nasal width NAS = Nad(x) - Nai(x), user parameter that is related to the frame parameter AP (bridge width)
- Ear point axis-front part plane distance OR= Ord (x) - Ori(x) related to the arm length (LV)
- Distance between ear points TEMP= Ord(y) - Ori(y) related to the distance between arms (DV)
- Ear angle (AO) such as the angle formed by the arm contact point on the ear with the horizontal line on the central point of the nose (the average ear value
right to left is taken), AOd = Nc(y)-Ord(y), related to the arm angle (AV) Where (x) means difference "x" co-ordinates and (y) means difference "y" co-ordinates

Below is a specific example of assigning relationships between the frame parameters and the user parameters:

**Table 2: Table relating the user and frame parameters**

| User parameter | Frame parameter | Ratio |
|---|---|---|
| DIP | AF | 1 to 1.1 |
| NAS | AP | 1 to 1.3 |
| OR | LV | 1 to 1 |
| TEMP | DV | 1 to 1 |
| AO | AV | 1 to 1 |

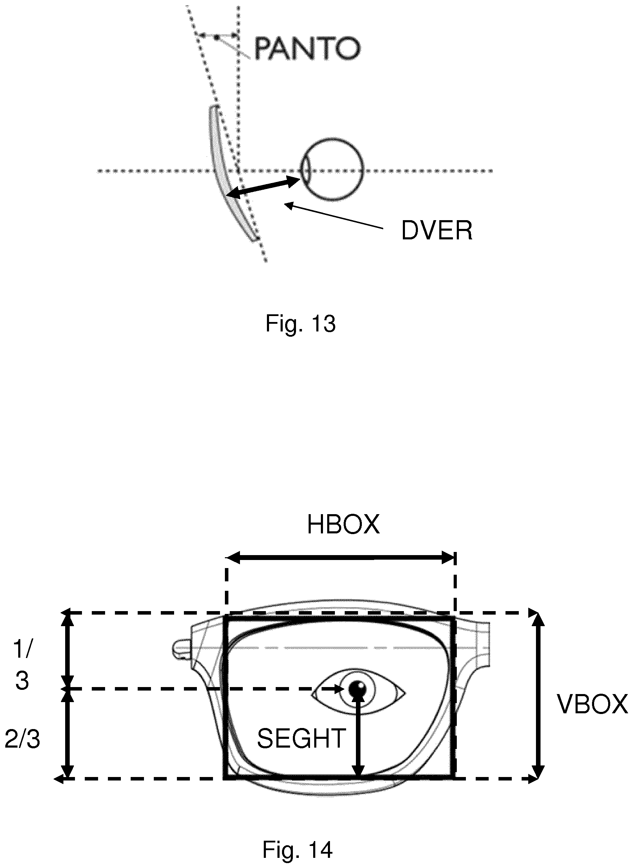

Before determining the specific values of the frame parameters, the position of use of the lenses must be determined (or the ideal position of the lenses in relation to the position of the user's eyes and face) and from there it is possible to determine the tilt of the lens with respect to the vertical plane (pantoscopic angle), the wrapping and the vertex distance (distance between lens or eye). (See Figure 13). This position of the lenses determines the position of the frame on the user's face, but for it to lie well the parameters adjusting it correctly must be re-dimensioned.

One consequence of the point above is that the plane containing the contour of the lenses (the housing of the lenses) is preset. See Figure 13. After setting the position of the lenses, the dimensions of the parameters determining the dimensions of the front part, boxing, nasal bridge, length and distance between arms, wrapping and pantoscopic angle, etc. must be set.

For the specific user from whom the data in Table 1 were obtained and based on the relations between the parameters considered in Table 2, the values corresponding to a frame model are (in millimeters):

| | | |
|---|---|---|
| Bridge width | AP | 7.89 |
| Total width of front part | AF | 128.16 |
| Distance between arms | DV | 123.68 |
| Arm angle | AV | 12.31 |
| Arm length | LV | 98.27 |
| Horizontal boxing | HBOX | 45.8 |
| Vertical boxing | VBOX | 40.32 |
| Minimum distance between lenses | DBL | 14.83 |
| Wrapping angle of front part | ZTILT | 10.00 |
| Curvature of the lens | FCRV | 5.00 |

While the values for the correct centring of the lenses are (in mm):

| | | |
|---|---|---|
| Right pupillary-nasal distance | NPd | 30.46 |
| Left pupillary-nasal distance | NPi | 31.02 |
| | | |
| Assembly height of the lens (right eye) | SEGHTR | 23.69 |
| Assembly height of the lens (left eye) | SEGHTL | 23.69 |
| Pantoscopic angle of the lenses | PANTO | 15.00 |

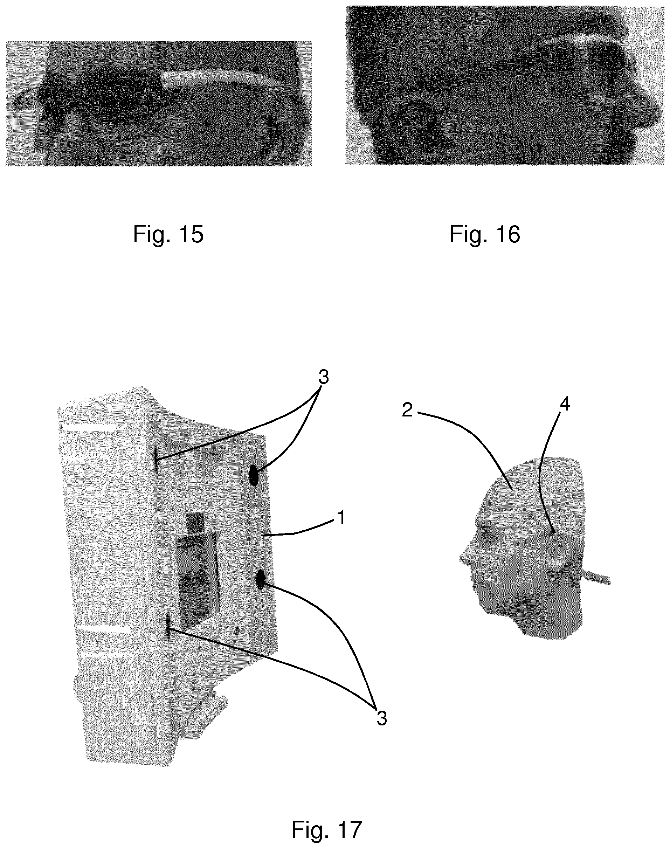

With this procedure, the dimensional characteristics of the frames can be adjusted to the user's needs. In particular, as has already been seen, there are cases where the need to modify parameters such as the pantoscopic angle is important. See Figures 15 and 16.

Figure 17 shows some image taking means 1 according to the invention. The image taking means 1 are attached to a column (not shown in the Figures), preferably by movement means that allow regulating their height in order to adapt them to the height of the face of the user 2. The image taking means 1 comprise 4 cameras 3 separated from each other. The cameras 3 are suitable both for taking images in the visible spectrum and for taking images in the infra-red spectrum. The image taking means 1 comprise advantageously visible light sources and some infra-red radiation sources that are suitable for illuminating the user 2 the moment the images are taken. The image taking means 1 take first of all, simultaneously, an image in the visible spectrum with each of the cameras 3 and, after about 200 milliseconds, they take an image in the infra-red spectrum with each of the cameras 3, also simultaneously.

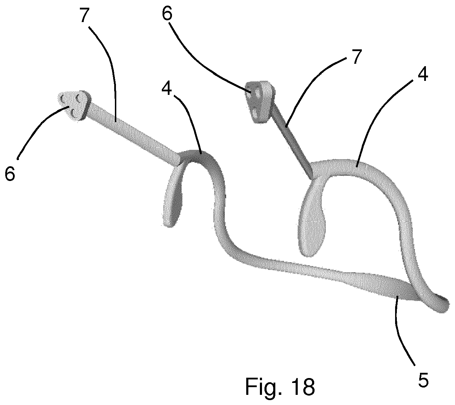

The user 2 preferably wears some reference devices 4 that reference the point of contact between the frame and the ears of the user 2. In the example in the Figures 17 and 18, the two reference devices 4 (one for each ear) are joined together by an arch 5 that extends behind the head of the user 2, approximately at the height of the nape of the neck. This preferred solution allows having both reference devices 4 physically joined, but in such a way that the arch 5 that joins them does not affect the image captured by the cameras 3 and which will be shown afterwards to the user with the chosen glasses. In the case of arches that extend at the top of the head, the arch is clearly visible and, although it is subsequently removed from the captured images, it affects the user's hair and hairstyle, which makes it harder to remove it from the images without its effect on the user's head being noticeable. Since it is possible that the part of the reference device 4 directly in contact with the top part of the ear is not visible in the images (or, at least, not clearly visible), it is advantageous to provide the reference device 4 with a reference plane 6 which is moved away from the head of the user 2 by means of an arm 7 with known dimensions. This way the reference plane 6 is clearly visible in the images taken by the image taking means 1 and the exact position of the point of contact between the frame and the ears can be calculated appropriately. Preferably the reference plane 6 has some surface finish that facilitates its subsequent detection.

### Other references used in the Figures

- PHRP:: Horizontal plane containing the pupillary reflex points
- DVER:: Vertex distance

## Claims

1. Procedure for ordering glasses, said glasses comprising a frame and a pair of lenses, **characterised in that** it comprises the following stages:
- obtaining data on the user, which includes obtaining morphological data on the user's head,
- determining the optimum position of the lenses with respect to the user's face,
- determining the feasible frames from among the frames on a frame database, and ruling out the non-feasible frames,
- calculating at least a feasible pair of lenses for each of said feasible frames and, in the event that it is not possible to obtain any feasible lenses for a certain frame, ruling out said frame from among the feasible frames,
- positioning a feasible pair of lenses in each feasible frame,
- presenting to the user, a database of feasible glasses, each made up of a feasible frame with a feasible pair of lenses,
- user selecting a feasible frame from the database of feasible glasses, and representing a 3D image of the user's face with the selected frame arranged in its position of use,
- selecting at least one pair of lenses from among the feasible lenses for the selected frame and representing a 3D image of the user's face with the frame and the selected lenses assembled,
- confirming a user selection and placing the corresponding order.

2. Procedure according to claim 1, **characterised in that** said stage of obtaining user data includes obtaining the user's prescription data, and said stage of calculating at least a feasible pair of lenses is done taking into account the user's prescription data.

3. Procedure according to one of the claims 1 or 2, **characterised in that** obtaining said morphological data on the user's head comprises obtaining data on the width of the face, the nasal surface, the position of the ears and the position of the pupils in a three-dimensional space, by obtaining stereoscopic images of the user's head.

4. Procedure according to any one of the claims 1 to 3, **characterised in that** obtaining said morphological data on the user's head comprises taking simultaneous images in the visible spectrum and in the infra-red spectrum, where the images in the infra-red spectrum are used to determine the position of the pupils, and preferably obtaining said morphological data on the user's head is done without the user wearing any glasses or frames.

5. Procedure according to any one of the claims 1 to 4, **characterised in that** obtaining said morphological data on the user's head is done by positioning a reference device on the user's ears.

6. Procedure according to any one of the claims 1 to 5, **characterised in that** said stage of determining the optimum position of the lenses with respect to the user's face the lenses are placed at a preset distance from the eye, the eye vision axis is made to coincide with the point of reference for the assembly and/or the lenses are positioned with a preset pantoscopic angle.

7. Procedure according to any one of the claims 1 to 6, **characterised in that** in said stage of determining the feasible frames, feasible frames are considered to be those that allow positioning the lenses within preset ranges of the optimum position.

8. Procedure according to any one of the claims 1 to 7, **characterised in that** in said stage of calculating at least a feasible pair of lenses, the frames where [a] the diameter of at least one of the lenses is bigger than a preset maximum value, [b] the thickness of at least one of the lenses is smaller than a preset value at some point thereof and/or [c] the thickness of at least one of the lenses is greater than a preset value at some point thereof, are ruled out.

9. Procedure according to any one of the claims 1 to 8, **characterised in that** said stage of determining the feasible frames includes a stage of personalising parameterised frames included in said frame database, where the personalisation includes assigning specific values to some parameters on said parameterised frames, where the shape and/or dimension of said parameterised frames depends on the values assigned to said parameters, and where the specific values assigned are such that they generate a shape of the parameterised frame that positions the lenses in preset ranges of their optimum position.

10. Procedure according to the claim 9, **characterised in that** in said personalisation stage some essential design characteristics are preserved and said specific values are related to the user's facial dimensions where, preferably, said specific values imply that the dimensions of the frame affected by said specific values coincide with the corresponding dimensions of the user's head.

11. Procedure according to one of the claims 9 or 10, **characterised in that** said personalisation stage of parameterised frames is done using grid deformation methods.

12. Procedure according to any one of the claims 9 to 11, **characterised in that** said personalisation stage includes a stage of incorporating at least one identifying mark on said parameterised frames, preferably said identifying mark comprises alphanumeric characters, drawings, patterns or logos.

13. Procedure according to any one of the claims 1 to 12, **characterised in that** said selection stage comprises a stage of selecting elements of the frame from a plurality of available options.

14. Procedure according to any one of the claims 1 to 13, **characterised in that** it comprises a stage of generating a database of parameterised frames that comprises the following stages:
- creating a new design of a frame, or importing the 3D data of a pre-existing frame, with a design that characterises it,
- determining the characteristics that identify the design of the frame, including:
• Identifying and separating the parts of the frame that are independent from the rest and which, therefore, are suitable for being modified without altering the dimensions or appearance of the rest,
• Determining the parts of the frame that are going to be modified by preserving an aspect ratio,
• Determining the parts of the frame that have to remain invariable,
- determining the way in which the invariable parts of the modifiable parts connect together and assigning the parameters that determine the modification of the modifiable parts,
- determining the restrictions to apply to the design,
- constructing a parametric 3D model of the frame which preserves the original characteristics of the design and which is suitable for being modified according to a set of degrees of freedom defined by the parameters,
- determining the ranges and the type of variation possible for each personalisation parameter for each frame model based on the established restrictions, and
- determining the parameters of the frame that must coincide with certain points, distances and/or sections of the user's head.

15. Procedure for manufacturing glasses, **characterised in that** it comprises a procedure for ordering glasses according to any one of the claims 1 to 14, and a stage of manufacturing and assembling the frame and the lenses selected by the user.

16. Procedure for manufacturing glasses, **characterised in that** it comprises a procedure for ordering glasses according to any one of the claims 1 to 14, and a stage of manufacturing the frame selected by the user.

17. Procedure for generating data on a parameterised frame, **characterised in that** it comprises the following stages:
- creating a new design of a frame, or importing the 3D data of a pre-existing frame, with a design that characterises it,
- determining the characteristics that identify the design of the frame, including:
• Identifying and separating the parts of the frame that are independent from the rest and which, therefore, are suitable for being modified without altering the dimensions or appearance of the rest,
• Determining the parts of the frame that are going to be modified by preserving an aspect ratio,
• Determining the parts of the frame that have to remain invariable,
- determining the way in which the invariable parts of the modifiable parts connect together and assigning the parameters that determine the modification of the modifiable parts,
- determining the restrictions to apply to the design,
- constructing a parametric 3D model of the frame which preserves the original characteristics of the design and which is suitable for being modified according to a set of degrees of freedom defined by the parameters,
- determining the ranges and the type of variation possible for each personalisation parameter for each frame model based on the established restrictions.

18. Device for processing data **characterised in that** it comprises means for implementing the procedure according to any one of the claims 1 to 14, where said device preferably comprises a plurality of image taking means (1) in the visible spectrum and in the infra-red spectrum, suitable for taking images of the head of the user (2) and of the pupils of the user (2), respectively, and some means for synchronizing said image taking means (1), suitable for synchronising the capturing of images by said image taking means (1), and most preferably it comprises some reference devices (4) suitable for being positioned on the ears of the user (2) and suitable for referencing the point of contact between the frame and the ears of the user (2).
